# EUROPÄISCHE PATENTSCHRIFT

(11) **EP 3 486 586 B1**
(45) Veröffentlichungstag und Bekanntmachung des Hinweises auf die Patenterteilung: **07.04.2021**
(21) Anmeldenummer: 18207252.0
(22) Anmeldetag: 20.11.2018
(51) Int. Cl.: F25D 27/00, F25D 29/00

(54) **KÜHL- UND/ODER GEFRIERGERÄT**
REFRIGERATION AND/OR FREEZER DEVICE
APPAREIL DE RÉFRIGÉRATION ET/OU DE CONGÉLATION

(30) Priorität: 20.11.2017 DE 102017127323; 20.12.2017 DE 102017130793
(43) Veröffentlichungstag der Anmeldung: 22.05.2019
(73) Patentinhaber: Liebherr-Hausgeräte Ochsenhausen GmbH, 88416 Ochsenhausen (DE)
(72) Erfinder: SCHIRMER, Marc, 88400 Biberach-Ringschneit (DE)
(74) Vertreter: Herrmann, Uwe

(56) Entgegenhaltungen:
- WO-A1-2007/062918
- WO-A1-2013/105185
- DE-A1-102008 009 862
- DE-A1-102011 054 761
- US-B1- 8 033 716

## Beschreibung

Die vorliegende Erfindung betrifft ein Kühl- und/oder Gefriergerät mit einer Lichtquelle und einem Lichtleitelement, das relativ zu der Lichtquelle so angeordnet ist, dass das von der Lichtquelle ausgehende Licht zumindest teilweise auf das Lichtleitelement fällt.

Aus dem Stand der Technik ist es bekannt, Kühl- und/oder Gefriergeräte mit Schriftzügen, Logos etc. zu versehen, die direkt hinterleuchtet sind. Des Weiteren ist es bekannt, Licht in Lichtleitplatten, wie z.B. in Glasplatten einzukoppeln, wobei die Einkopplung des Lichts stets in eine der Kanten erfolgt. Das auf diese Weise eingekoppelte Licht wird über die Fläche der Lichtleitplatte verteilt und kann ebenfalls dazu genutzt werden, einen Schriftzug oder dergleichen zu hinterleuchten. Allerdings ergibt sich bei dieser Art der Lichteinkopplung der Nachteil, dass die Kante, in die das Licht eingekoppelt wird, als Auskoppelbereich entfällt, d.h. nicht oder jedenfalls nicht in dem gleichen Maße beleuchtet wird, wie andere Kanten, die nicht als Einkoppelstelle dienen

Dokumente US8033716, DE102011054761, WO2013105185, WO2007062918 und DE102008009862 offenbaren Kühl- und/oder Gefriergeräte mit Lichtquellen und mit Lichtleitelementen.

Der vorliegenden Erfindung liegt somit die Aufgabe zugrunde, ein Kühl- und/oder Gefriergerät der eingangs genannten Art dahingehend weiterzubilden, dass eine möglichst gleichmäßige Beleuchtung aller Kanten des Lichtleitelementes ermöglicht wird.

Diese Aufgabe wird durch ein Kühl- und/oder Gefriergerät mit den Merkmalen des Anspruchs 1 gelöst.

Die vorliegende Erfindung ist im unabhängigen Anspruch 1 offenbart. Weitere Ausführungsbeispiele sind in abhängigen Ansprüchen offenbart.

Der vorliegenden Erfindung liegt somit der Gedanke zugrunde, als Einkoppelstelle wenigstens eine z.B. kegelförmige Vertiefung zu verwenden, von der aus das eingekoppelte Licht in der Platte verteilt wird. Die Vertiefung kann eine Längsachse aufweisen, die zur Hauptfläche senkrecht steht oder geneigt ist. Ist die Längsachse geneigt, beträgt der Winkel zwischen dieser und der Hauptfläche vorzugsweise mindestens 75°. Vorzugsweise "steht" die Vertiefung in der Platte, so dass sich zwischen der Hauptfläche und der Längsachse ein Winkel von 90° ergibt.

Die Hauptfläche ist größer als jede der Kanten, die sich an die Hauptfläche anschließen.

Vorzugsweise ist die Lichtquelle relativ zu dem Lichtleitelement, das z.B. als Platte ausgeführt sein kann, so angeordnet, dass das Licht auf die Spitze der Vertiefung fällt und vorzugsweise senkrecht zur Grundfläche der Vertiefung verläuft.

Dieses Licht wird an den Wandungen der Vertiefung umgelenkt und teilweise oder vollständig in Richtung der Kante bzw. Kanten der Lichtleitplatte bzw. des Lichtleitelementes gleitet.

So ist es möglich, alle Kanten des Lichtleitelementes vorzugsweise gleichmäßig zu beleuchten bzw. zu hinterleuchten, wodurch sich ein besonders ansprechender optischer Gesamteindruck ergibt.

Erfindungsgemäß ist es somit möglich, alle Kanten eines Lichtleitelementes unabhängig von deren Form und Anzahl ununterbrochen und homogen leuchten zu lassen bzw. zu hinterleuchten.

Das Lichtleitelement kann ein plattenförmiger Körper mit zwei vorzugsweise parallelen und vorzugsweise ebenen Hauptflächen sein, die durch Kanten miteinander verbunden sind.

Die Lichtauskopplung erfolgt in einer denkbaren Ausführungsform nur an den Kanten.

Grundsätzlich ist von der Erfindung jedoch auch umfasst, das Licht zusätzlich an der oder den Hauptflächen auszukoppeln, wozu geeignete Umlenkelemente vorhanden sind, wie z.B. eine Mattierung, Lasergravur, Bedruckung, eine Umlenkoptik etc.

Das Lichtleitelement weist somit insgesamt oder wenigstens bereichsweise lichtleitende Eigenschaften auf.

Das Lichtleitelement besteht beispielsweise teilweise oder vollständig aus Glas oder Kunststoff oder aus einem sonstigen lichtleitenden Material.

Erfindungsgemäß ist die Vertiefung rotationssymmetrisch. Auf diese Weise wird eine besonders gleichmäßige Verteilung des eingekoppelten Lichts in das Lichtleitelement und auf dessen Kanten erreicht.

Von der Erfindung ist jedoch auch eine deformierte Struktur der Vertiefung umfasst.

Auch muss die Vertiefung nicht spitz zulaufen, sondern kann auch eine abgerundete Spitze aufweisen.

Die Vertiefung kann eben verlaufende Wandungen aufweisen. Vorzugsweise verlaufen diese relativ zu einer sich durch die Vertiefung erstreckenden Mittelsenkrechten im 45°-Winkel, so dass die Wandungen relativ zueinander einen 90°-Winkel einschließen. Dies führt bei einer Lichtquelle mit nahezu oder vollständig parallelem Licht, das senkrecht auf die Lichtleitplatte fällt, zu einer 90°-Umlenkung der Lichtstrahlen z.B. über Totalreflexion. Somit breitet die Kegelstruktur das Licht in der Fläche des Lichtleitelementes aus. An den Kanten des Lichtleitelementes wird das Licht ausgekoppelt.

Jedoch sind von der Erfindung auch andere Winkelmaße umfasst, so dass das erfindungsgemäße Lichtleitelement nicht auf die genannten Werte beschränkt ist.

Von der Erfindung ist grundsätzlich der Fall umfasst, dass das Licht an den Wandungen der Kegelstruktur eine Totalreflexion (TIR) erfährt. Von der Erfindung ist jedoch auch der Fall umfasst, dass das eingekoppelte Licht aus der Lichtquelle an der Vertiefung bzw. deren Wandungen nicht totalreflektiert wird, sondern nur teilweise, so dass ein Teil des Lichts abweichend von der Richtung des totalreflektierten Lichts aus dem Lichtleitelement austritt, z.B. auf der von der Einkoppelseite gegenüberliegenden Seite des Lichtleitelementes.

Die Vertiefung, die z.B. als Kegelkontur ausgeführt ist, kann auch deformiert sein (Freiformfläche). Eine solche Kontur kann eingesetzt werden, um z.B. Licht, das kein kollimiertes Licht ist, gleichwohl in die Fläche der Lichtleitplatte umzulenken und an der oder den Kanten der Lichtleitplatte auszukoppeln.

Grundsätzlich kann die Struktur der Vertiefung so ausgebildet sein, dass die Lichtstrahlen von der Wandung der Struktur ohne erneute Umlenkung bzw. Reflexion in Richtung der Kante des Lichtleitelementes umgelenkt werden. Von der Erfindung ist jedoch auch der Fall umfasst, dass die Struktur so ausgeführt ist, dass die von der Wandung der Struktur umgelenkten Lichtstrahlen z.B. an einer oder mehreren Hauptflächen nochmals umgelenkt werden, bis sie schließlich zu der Kante des Lichtleitelementes gelangen, an der sie ausgekoppelt werden oder erneut umgelenkt werden.

Die Wandungen der Vertiefung verlaufen im Querschnitt durch die Platte bzw. durch das Lichtleitelement relativ zueinander vorzugsweise in einem Winkel von 80° bis 100°, vorzugsweise in einem Winkel von 90°.

Erfindungsgemäß weist das Lichtleitelement zwei Hauptflächen auf, die die Vorder- und Rückseite des Lichtleitelementes bilden, wobei die Vertiefung in einer oder beiden Hauptflächen angeordnet ist. Die Grundfläche der Vertiefung bildet vorzugsweise einen Teilbereich einer der Hauptflächen.

In einer weiteren bevorzugten Ausgestaltung der Erfindung ist die Vertiefung im Zentrum der Hauptfläche des Lichtleitelementes angeordnet.

Die (eine oder mehreren) Kanten das Lichtleitelementes verlaufen relativ zu der oder den Hauptflächen des Lichtleitelementes senkrecht, jedoch ist auch eine geneigte Anordnung der Kanten relativ zu einer oder ggf. mehreren Hauptflächen möglich und von der Erfindung umfasst.

Denkbar ist es weiterhin, dass die Kante(n) des Lichtleitelementes mit einer Fase und/oder mit einer sonstigen Veränderung der Kantenstruktur zum Zwecke der Änderung der Austrittsrichtung des Lichtes aus der Kante versehen ist bzw. sind. So können bestimmte optische Effekte bzw. ein Leuchtrahmen um die Hauptfläche des Lichtleitelementes gebildet werden, der in einer Draufsicht auf das Lichtleitelement sichtbar ist.

Beispielsweise ist es denkbar, dass die Kante(n) im 45° Winkel zu der oder zu den Hauptflächen verlaufen und so ausgeführt sind, dass das auf diese fallende Licht um 90° umgelenkt wird. In diesem Fall tritt das Licht senkrecht oder im Wesentlichen senkrecht zur Hauptfläche aus.

Innerhalb das Lichtleitelementes sind ein oder mehrere Elemente zur Umlenkung von Lichtstrahlen vorgesehen.

Weiterhin kann vorgesehen sein, dass auf der Hauptfläche des Lichtleitelementes eine strukturierte Zone, eine Platte oder eine Beschichtung mit einem Logo, Schriftzug oder dergleichen angeordnet ist. Bei der strukturierten Zone kann es sich beispielsweise um eine Gravur in der Hauptfläche des Lichtleitelementes handeln, die z.B. eine Auskoppelgeometrie bildet. Die Platte oder Beschichtung oder gleichgleichen kann das Logo etc. in Form einer Aussparung aufweisen, die mittels des Lichtleitelementes hinterleuchtet wird.

Die Vertiefung kann sich über die gesamte Dicke des Lichtleitelementes oder zumindest über mehr als 50 %, vorzugsweise über mehr als 75 % der Dicke des Lichtleitelementes erstrecken.

Das erfindungsgemäße Lichtleitelement ist als optisches Element innerhalb des gekühlten Innenraums angeordnet.

Sie kann beispielsweise als Ablageboden dienen und/oder Bestandteil einer Schublade bilden und/oder am Innenbehälter angeordnet sein, um einen besonders ansprechenden optischen Gesamteindruck zu liefern und den gekühlten Innenraum des Gerätes zu beleuchten.

Vorzugsweise dient das Lichtleitelement als optisches Element zur Be- bzw. Hinterleuchtung eines Logos, Textes etc.

Das Lichtleitelement kann auch als Abdeckung dienen, z.B. als Ventilatorabdeckung. In diesem Fall kann das Lichtleitelement aus Sicht eines Nutzers, der in das geöffnete Gerät blickt, vor dem Ventilator angeordnet sein.

Dies gilt für andere Verschlusselemente entsprechend, wie z.B. Deckel, Klappen, Schubladen etc.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert. Es zeigen:
- Figur 1:: eine perspektivische Ansicht einer viereckigen Lichtleitplatte gemäß der Erfindung mit einer zentralen kegelförmigen Vertiefung,
- Figur 2:: eine Schnittansicht durch eine viereckige Lichtleitplatte gemäß Figur 1 mit Beaufschlagung durch kollimiertes Licht und nicht kollimiertes Licht,
- Figur 3:: eine Schnittansicht durch eine viereckige Lichtleitplatte gemäß der Erfindung mit Beaufschlagung durch nicht kollimiertes Licht mit abgeschrägten Kanten,
- Figur 4:: eine perspektivische Ansicht sowie eine Schnittansicht einer viereckigen Lichtleitplatte gemäß der Erfindung mit zwei kegelförmigen Vertiefungen,
- Figur 5:: eine perspektivische Ansicht einer runden Lichtleitplatte gemäß der Erfindung mit einer zentralen kegelförmigen Vertiefung und unterschiedlichen Ansichten des Strahlengangs,
- Figur 6:: eine perspektivische Ansicht einer viereckigen Lichtleitplatte gemäß der Erfindung mit einer dezentralen kegelförmigen Vertiefung und Schriftzug sowie Ansichten des Strahlengangs ohne und mit Hinterleuchtung des Schriftzugs und
- Figur 7:: eine perspektivische Ansicht einer viereckigen Lichtleitplatte gemäß einem Beispiel, das nicht ein Teil der Erfindung ist, mit einem hinterleuchteten Schriftzug und Kantenillumination.

In den Figuren sind gleiche oder funktionsgleiche Elemente mit gleichen Bezugszeichen versehen.

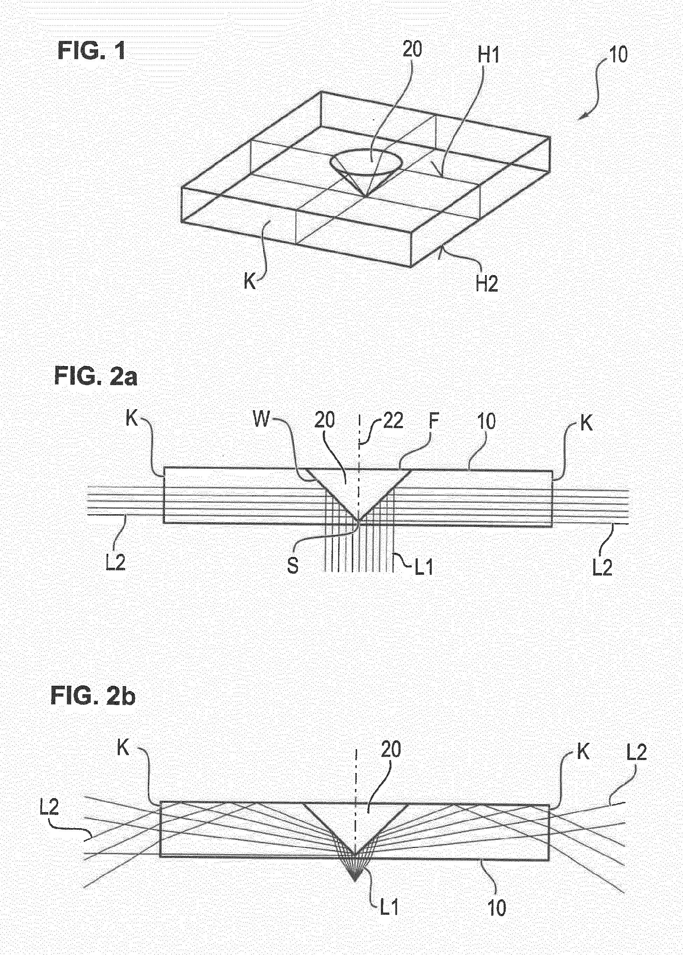

Figur 1 zeigt in einer perspektivischen Ansicht eine z.B. aus Glas oder Kunststoff bestehende Lichtleitplatte 10 gemäß der Erfindung.

Die Platte 10 weist zwei gegenüberliegende und parallel zueinander verlaufende Hauptflächen H1 und H2 auf. Diese sind durch vier Kanten K miteinander verbunden. Die Platte 10 ist in der Draufsicht viereckig. In der Mitte weist die Platte 10 eine kegelförmige Vertiefung 20 auf, die sich ausgehend von der oben dargestellten Hauptfläche H1 nach unten, d.h. zur Hauptfläche H2 hin verjüngt.

Wie dies aus dem Strahlengang gemäß Figur 2a) hervorgeht, wird das in die Lichtleitplatte 10 eingekoppelte Licht L1, z.B. von einer LED-Lichtquelle von unten, d.h. von Seiten der Kegelspitze in die Lichtleitplatte eingekoppelt. Die Lichtrichtung des eingekoppelten Lichts L1 verläuft parallel zu der Kegellängsachse 22 und in Richtung von der Kegelspitze S zur Kegelgrundfläche F.

Die kegelförmige Vertiefung 20 wird durch Wandungen bzw. eine umlaufende und spitz zulaufende Wandung W gebildet, auf die das von der Lichtquelle stammende Licht L1 trifft, wie dies aus Figur 2a) hervorgeht.

An dieser Wandung W wird das Licht L1 totalreflektiert und erfährt dabei eine Umlenkung um 90°. Es verläuft dann parallel zu den Hauptflächen H1 und H2 in Form von Lichtstrahlen L2, die an den vier Kanten K der Lichtleitplatte 10 senkrecht zu den Kanten gleichmäßig verteilt über die Kantenlänge austreten. Anstatt von vier Kanten können je nach Form der Lichtleitplatte 10 auch mehr oder weniger Kanten vorhanden sein.

Figur 2b) zeigt ein Ausführungsbeispiel, bei dem in eine Lichtleitplatte 10 gemäß Figur 1 nicht kollimiertes Licht L1 eingekoppelt wird. Aus Figur 2b) ist ersichtlich, dass das Licht innerhalb der Lichtleitplatte 10 nicht parallel verläuft und im Gegensatz zu dem Ausführungsbeispiel in Figur 2a) eine Reflexion an der oberen Hauptfläche H1 erfährt. Wie auch in dem Ausführungsbeispiel in Figur 2a) tritt das Licht L2 nur an den Kanten K aus, allerdings nicht parallel, sondern in unterschiedlichen Richtungen.

In beiden Fällen wird jedoch durch die kegelförmige Vertiefung 20 das eingekoppelte Licht L1 zu allen Kanten der Platte 10 umgelenkt, so dass alle Kanten homogen und ohne Unterbrechung für die Lichteinkopplung leuchten. Eine derartige Unterbrechung liegt nicht vor, da das Licht nicht in die Kante, sondern in eine oder mehrere Hauptflächen eingekoppelt wird.

Zusätzlich ist es je nach Ausführung möglich, Licht nicht nur an der oder an den Kanten, sondern auch an der Hauptfläche auszukoppeln, wozu geeignete Umlenkelemente vorhanden sind, wie z.B. eine Mattierung, Lasergravur, Bedruckung, Umlenkoptik etc.

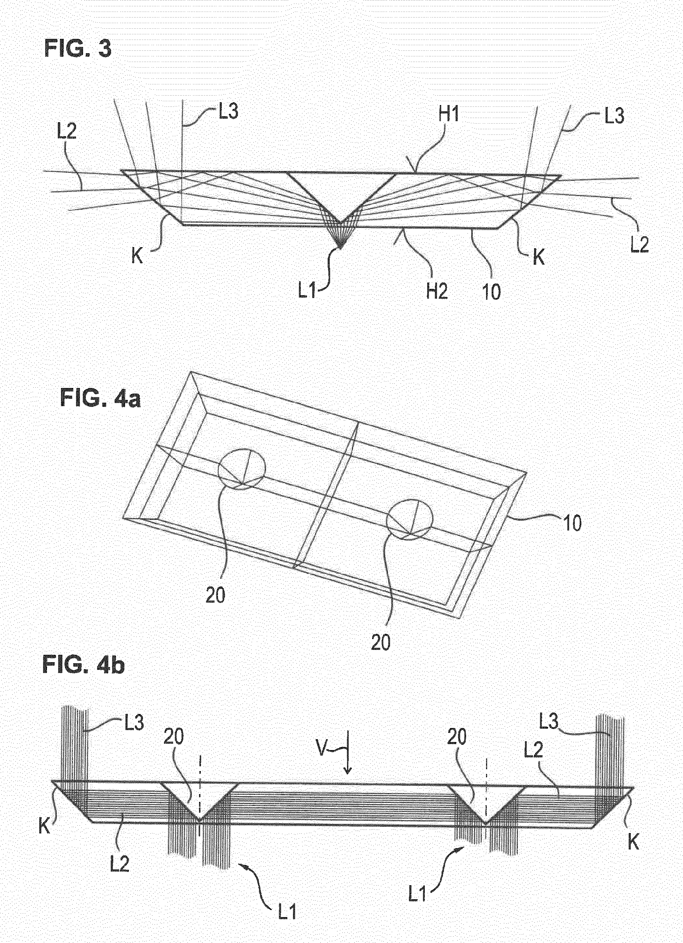

Figur 3 offenbart ein Ausführungsbeispiel mit Kanten K, die nicht senkrecht zu den Hauptflächen H1 und H2 verlaufen, sondern in einem davon abweichenden Winkel.

Die Kante K schließt mit der unteren Hauptfläche H2 einen stumpfen und mit der oberen Hauptfläche einen spitzen Winkel ein, grundsätzlich ist auch eine umgekehrte Anordnung denkbar und von der Erfindung umfasst.

Die Abschrägung der Kante gemäß Figur 3 hat den gezeigten Effekt, dass einige Lichtstrahlen L3 an der Kante K reflektiert werden und dann in einer Richtung aus der Platte 10 austreten, die zu einem vor der Platte 10 stehenden Betrachter weist. Dieser nimmt diese Lichtstrahlen L3 somit als umlaufenden Leuchtrahmen wahr. Aus Figur 4a) geht eine Lichtleitplatte mit zwei voneinander beabstandeten kegelförmigen Vertiefungen 20 und abgeschrägten Kanten K hervor. Figur 4b) zeigt den Verlauf von kollimiertem Licht L1 in die Platte 10, die Totalreflexion an den Wandungen der Vertiefungen 20, dessen Ausbreitung parallel zu den Hauptflächen (L2) und die erneute Totalreflexion an den Kanten, so dass das Licht als Strahlengang L3 aus der Lichtleitplatte austritt.

Wie dies aus Figur 4b) hervorgeht, ergibt sich daraus für den vor der Platte 10 stehenden und in Richtung V auf die Platte 10 blickenden Betrachter ein umlaufender leuchtender Rahmen.

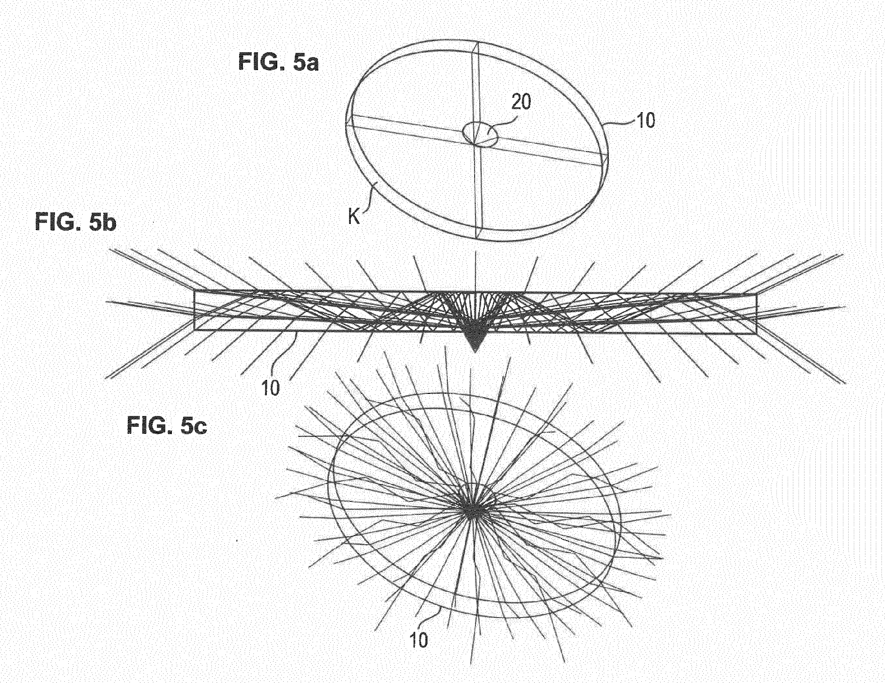

Figur 5a) zeigt ein Ausführungsbeispiel mit einer runden, beispielsweise kreisförmigen Platte und einer einzigen umlaufenden Kante. Die kegelförmige Vertiefung befindet sich im Mittelpunkt der Platte 10. Figur 5b) zeigt die Platte 10 und den Strahlengang im Querschnitt und Figur 5c) in einer perspektivischen Ansicht.

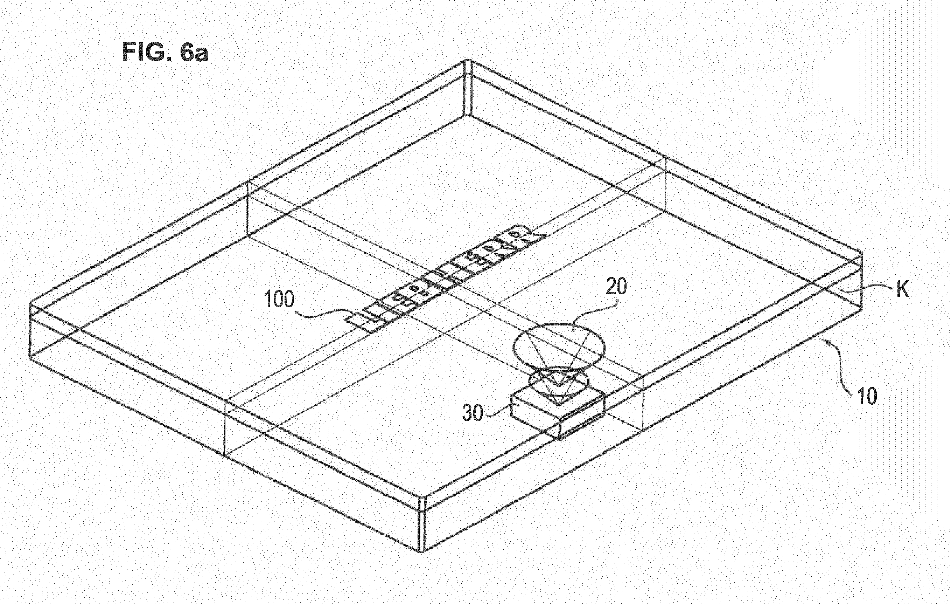

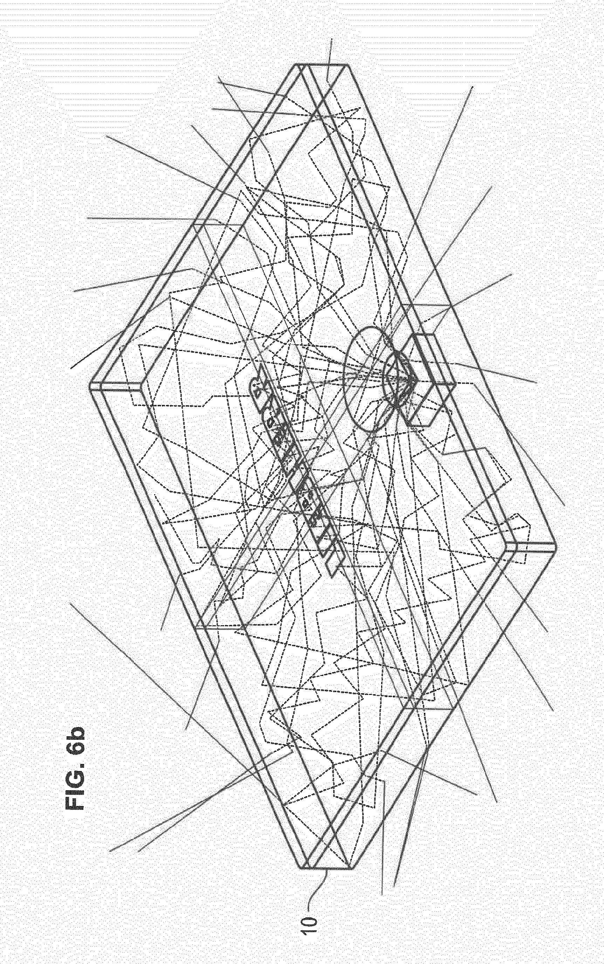

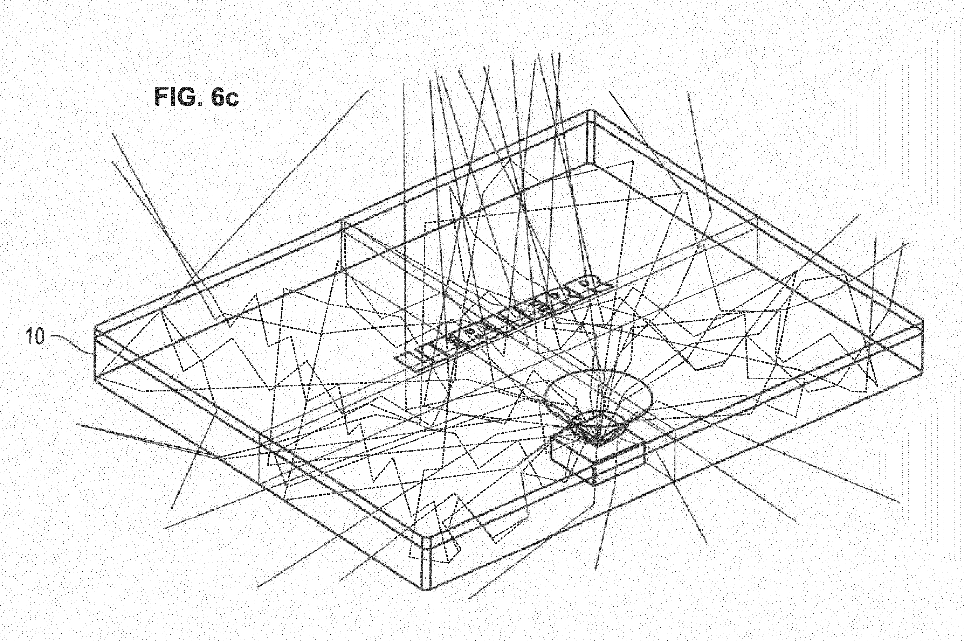

Aus Figur 6 geht ein Ausführungsbeispiel hervor, bei dem die Platte 10 eine kegelförmige Vertiefung 20 versetzt zu deren Zentrum aufweist. Zentral in dem mittleren Bereich der Platte 10 befindet sich ein Schriftzug 100, der als strukturierte Zone, z.B. als Aufrauhung oder anderweitig ausgeführt sein kann, so dass Licht nicht nur durch die Kanten K, sondern auch durch diese strukturierte Zone 100, d.h. durch den Schriftzug etc. ausgekoppelt wird.

Auch ist es grundsätzlich denkbar, den Schriftzug nicht als Auskoppelstelle zu verwenden, sondern einen Bereich um diesen herum, so dass der Schriftzug hinterleuchtet wird.

Mit dem Bezugszeichen 30 ist eine LED oder eine sonstige Lichtquelle dargestellt, die in die Platte 10 Licht unterhalb der kegelförmigen Vertiefung einkoppelt.

Figur 6b) zeigt den Strahlengang durch die Platte gemäß Figur 6a) ohne hinterleuchteten Schriftzug und Figur 6b) mit hinterleuchtetem Schriftzug.

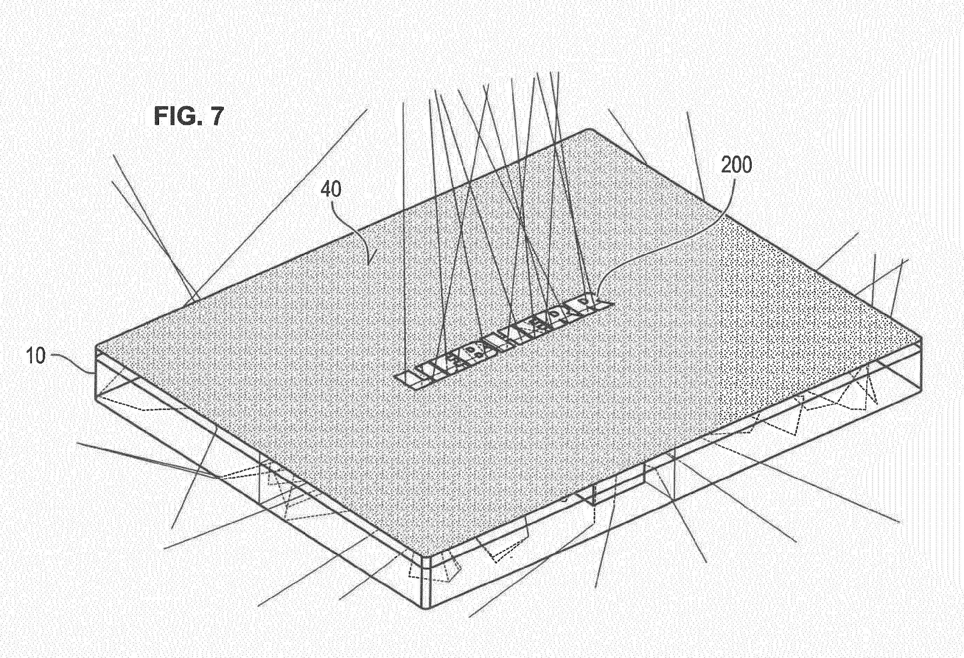

Aus Figur 7 ist schließlich eine Ausführungsform gemäß einem Beispiel, das nicht ein Teil der Erfindung ist, ersichtlich, bei der die Hauptfläche der Lichtleitplatte 10 mit einer Abdeckung 40 oder Beschichtung, wie z.B. einer Lackschicht, etc. bedeckt ist. In dieser Abdeckung 40 befindet sich eine Aussparung in Form eines Schriftzuges 200, der durch die Lichtleitplatte, die in diesem Bereich sowie in den Kanten K Licht auskoppelt, hinterleuchtet wird.

## Patentansprüche

1. Kühl- und/oder Gefriergerät mit einer Lichtquelle und einem Lichtleitelemenl (10) in Form einer Lichtleitplatte (10) mit zwei Hauptflächen (H1, H2), die die Vorder- und Rückseite der Lichtleitplatte (10) bilden, und angrenzenden Kanten, wobei die Lichtleitplatte (10) relativ zu der Lichtquelle so angeordnet ist, dass das von der Lichtquelle ausgehende Licht auf die Lichtleitplatte (10) fällt, wobei an der Hauptfläche (H1) eine pyramiden- oder kegelförmige Vertiefung (20) zur Verteilung des eingekoppelten Lichts vorgesehen ist, deren Grundfläche in einer der Hauptflächen (H1, H2) angeordnet ist und auf deren relativ zur Hauptfläche (H1) schräg verlaufende Fläche(n) das von der Lichtquelle ausgehende Licht fällt, wobei das Licht senkrecht zur Grundfläche der Vertiefung (20) verläuft, und wobei die Lichtleitplatte (10) innerhalb des gekühlten Innenraums des Geräts angeordnet ist, um diesen zu beleuchten.

2. Kühl- und/oder Gefriergerät nach Anspruch 1, **dadurch gekennzeichnet, dass** die Längsachse der Vertiefung (20) mit der Hauptfläche einen Winkel >75° und vorzugsweise einen Winkel von 90° einschließt.

3. Kühl- und/oder Gefriergerät nach einem der vorhergehenden Ansprüche, **dadurch gekennzeichnet, dass** die Hauptfläche (H1, H2) der Lichtleitplatte (10) eben ist.

4. Kühl- und/oder Gefriergerät nach Anspruch 1 oder 2, **dadurch gekennzeichnet, dass** die Hauptfläche (H1, H2) der Lichtleitplatte (10) uneben ist.

5. Kühl- und/oder Gefriergerät nach einem der vorhergehenden Ansprüche, **dadurch gekennzeichnet, dass** die Vertiefung (20) gerade verlaufende Kanten bzw. Flächen aufweist.

6. Kühl- und/oder Gefriergerät nach einem der Ansprüche 1 bis 4, **dadurch gekennzeichnet, dass** die Kontur der Pyramide (20) und/oder des Kegels (20) deformiert ist.

7. Kühl- und/oder Gefriergerät nach einem der vorhergehenden Ansprüche, **dadurch gekennzeichnet, dass** die Vertiefung (20) pyramidenförmig ist und die Wandungen der Vertiefung (20) relativ zueinander in einem Winkel von 80° bis 100°, vorzugsweise in einem Winkel von 90° verlaufen.

8. Kühl- und/oder Gefriergerät nach einem der vorhergehenden Ansprüche, **dadurch gekennzeichnet, dass** sich die Vertiefung (20) im Zentrum der Hauptfläche (H1) erstreckt.

9. Kühl- und/oder Gefriergerät nach einem der vorhergehenden Ansprüche, **dadurch gekennzeichnet, dass** eine oder mehrere Kanten der Lichtleitplatte (10) zu den Hauptflächen (H1, H2) senkrecht verlaufen.

10. Kühl- und/oder Gefriergerät nach einem der vorhergehenden Ansprüche, **dadurch gekennzeichnet, dass** eine oder mehrere Kanten der Lichtleitplatte (10) mit einer Fase versehen sind.

11. Kühl- und/oder Gefriergerät nach einem der vorhergehenden Ansprüche, **dadurch gekennzeichnet, dass** innerhalb der Lichtleitplatte (10) ein oder mehrere Elemente zur Umlenkung von Lichtstrahlen vorgesehen sind.

12. Kühl- und/oder Gefriergerät nach einem der vorhergehenden Ansprüche, **dadurch gekennzeichnet, dass** auf einer Hauptfläche (H1, H2) der Lichtleitplatte (10) eine Platte oder Beschichtung mit einem Logo oder einem Schriftzug angeordnet ist oder das die Hauptfläche (H1, H2) eine optische Struktur in Form eines Logos oder eines Schriftzuges aufweist.

## Claims

1. Refrigerator and/or freezer comprising a light source and a light-guide element (10) in the form of a light-guide plate (10) comprising two main surfaces (H1, H2), which form the front side and rear side of the light-guide plate (10), and adjacent edges, wherein the light-guide plate (10) is arranged relative to the light source such that the light emitted by the light source is incident on the light-guide plate (10), wherein a pyramidal or conical depression is provided on the main surface (H1) for distributing the coupled-in light, the base of which is arranged in one of the main surfaces (H1, H2) and on the surface(s) of which extending obliquely relative to the main surface (H1) the light emitted by the light source is incident, wherein the light extends perpendicularly to the base of the depression (20), and wherein the light-guide plate (10) is arranged within the cooled interior of the appliance in order to illuminate it.

2. Refrigerator and/or freezer according to claim 1, **characterised in that** the longitudinal axis of the depression (20) encloses an angle of > 75° and preferably an angle of 90° together with the main surface.

3. Refrigerator and/or freezer according to any of the preceding claims, **characterised in that** the main surface (H1, H2) of the light-guide plate (10) is planar.

4. Refrigerator and/or freezer according to claim 1 or 2, **characterised in that** the main surface (H1, H2) of the light-guide plate (10) is uneven.

5. Refrigerator and/or freezer according to any of the preceding claims, **characterised in that** the depression (20) comprises straight edges and/or surfaces.

6. Refrigerator and/or freezer according to any of claims 1 to 4, **characterised in that** the contour of the pyramid (20) and/or the cone (20) is deformed.

7. Refrigerator and/or freezer according to any of the preceding claims, **characterised in that** the depression (20) is pyramidal and the walls of the depression (20) extend relative to one another at an angle of from 80° to 100°, preferably at an angle of 90°.

8. Refrigerator and/or freezer according to any of the preceding claims, **characterised in that** the depression (20) extends in the centre of the main surface (H1).

9. Refrigerator and/or freezer according to any of the preceding claims, **characterised in that** one or more edges of the light-guide plate (10) extend perpendicularly to the main surfaces (H1, H2).

10. Refrigerator and/or freezer according to any of the preceding claims, **characterised in that** one or more edges of the light-guide plate (10) are provided with a bevel.

11. Refrigerator and/or freezer according to any of the preceding claims, **characterised in that** one or more elements for deflecting light beams are provided within the light-guide plate (10).

12. Refrigerator and/or freezer according to any of the preceding claims, **characterised in that** a plate or coating comprising a logo or lettering is arranged on a main surface (H1, H2) of the light-guide plate (10) or **in that** the main surface (H1, H2) comprises an optical structure in the form of a logo or lettering.

## Revendications

1. Appareil de réfrigération et/ou de congélation comprenant une source de lumière et un élément de guidage de la lumière (10) sous la forme d'une plaque de guidage de la lumière (10) dotée de deux surfaces principales (H1, H2), qui forment la face avant et la face arrière de la plaque de guidage de la lumière (10), et de bords adjacents, la plaque de guidage de la lumière (10) étant disposée par rapport à la source de lumière de telle manière que la lumière sortant de la source de lumière frappe la plaque de guidage de la lumière (10), un creux (20) en forme de pyramide ou de cône étant prévu sur la surface principale (H1) pour diffuser la lumière injectée, la base dudit creux étant disposée dans une des surfaces principales (H1, H2) et la lumière sortant de la source lumineuse frappant la/les surface(s) oblique(s) par rapport à la surface principale (H1) de celui-ci, la lumière s'étendant perpendiculairement à la base du creux (20), et la plaque de guidage de la lumière (10) étant disposée à l'intérieur de l'espace intérieur réfrigéré de l'appareil pour éclairer celui-ci.

2. Appareil de réfrigération et/ou de congélation selon la revendication 1, **caractérisé en ce que** l'axe longitudinal du creux (20) définit, avec la surface principale, un angle > 75° et de préférence un angle de 90°.

3. Appareil de réfrigération et/ou de congélation selon l'une des revendications précédentes, **caractérisé en ce que** la surface principale (H1, H2) de la plaque de guidage de la lumière (10) est plane.

4. Appareil de réfrigération et/ou de congélation selon la revendication 1 ou 2, **caractérisé en ce que** la surface principale (H1, H2) de la plaque de guidage de la lumière (10) n'est pas plane.

5. Appareil de réfrigération et/ou de congélation selon l'une des revendications précédentes, **caractérisé en ce que** le creux (20) comporte des bords ou surfaces s'étendant de manière rectiligne.

6. Appareil de réfrigération et/ou de congélation selon l'une des revendications 1 à 4, **caractérisé en ce que** le contour de la pyramide (20) et/ou du cône (20) est déformé.

7. Appareil de réfrigération et/ou de congélation selon l'une des revendications précédentes, **caractérisé en ce que** le creux (20) est en forme de pyramide et les parois du creux (20) s'étendent les unes par rapport aux autres selon un angle de 80° à 100°, de préférence selon un angle de 90°.

8. Appareil de réfrigération et/ou de congélation selon l'une des revendications précédentes, **caractérisé en ce que** le creux (20) s'étend au centre de la surface principale (H1).

9. Appareil de réfrigération et/ou de congélation selon l'une des revendications précédentes, **caractérisé en ce qu'**un ou plusieurs bords de la plaque de guidage de la lumière (10) s'étendent perpendiculairement aux surfaces principales (H1, H2).

10. Appareil de réfrigération et/ou de congélation selon l'une des revendications précédentes, **caractérisé en ce qu'**un ou plusieurs bords de la plaque de guidage de la lumière (10) sont pourvus d'un chanfrein.

11. Appareil de réfrigération et/ou de congélation selon l'une des revendications précédentes, **caractérisé en ce qu'**un ou plusieurs éléments pour dévier des rayons lumineux sont prévus à l'intérieur de la plaque de guidage de la lumière (10).

12. Appareil de réfrigération et/ou de congélation selon l'une des revendications précédentes, **caractérisé en ce qu'**une plaque ou un revêtement avec un logo ou une inscription est disposé(e) sur une surface principale (H1, H2) de la plaque de guidage de la lumière (10) ou **en ce que** la surface principale (H1, H2) comporte une structure optique sous la forme d'un logo ou d'une inscription.
